# EUROPEAN PATENT APPLICATION

(11) **EP 4 391 300 A1**
(43) Date of publication of application: **26.06.2024**
(21) Application number: 23218018.2
(22) Date of filing: 19.12.2023
(51) Int. Cl.: H02J 50/00, H04B 5/79

(54) **WIRELESS POWER TRANSMISSION SYSTEM FOR ACTING UPON MOBILE ELECTRONIC DEVICES**

(30) Priority: 23.12.2022 US 202263435027 P
(71) Applicant: Ossia Inc., Redmond, WA 98052 (US)
(72) Inventor: ZEINE, Hatem, Redmond, WA, 98052 (US)
(74) Representative: AWA Sweden AB

(57) **Abstract**

A wireless power transmission system is provided. The wireless power transmission system includes a transceiver that generates a beacon signal and a high power transmission. The wireless power transmission system includes an antenna that transmits the beacon signal, receives a reflected signal from a mobile electronic device, and transmits the high power transmission to the mobile electronic device. The wireless power transmission system includes a controller that calibrate the high power transmission according to a phase pattern of the reflected signal. The phase pattern includes a phase set to guide the high power transmission back to the mobile electronic device that reflected the beacon signal.

## Description

### CROSS-REFERENCE TO RELATED APPLICATIONS

This application claims priority to provisional U.S. Application Number 63/435,027, filed December 23, 2022, the contents of which are hereby incorporated by reference in their entirety.

### FIELD OF INVENTION

The present invention relates generally to a wireless power transmission system for acting upon mobile electronic devices.

### BACKGROUND

Devices (for example laptop computers, mobile devices, or drones) include circuitry for sending and receiving communications. This circuitry can be acted upon (e.g., jammed, obstructed, crippled, or destroyed) with high powered transmissions, and the high powered transmissions generally require knowing a location of the devices to be able to point a signal in correct direction and confirm an action. At present, there is no way of knowing if a device was acted upon correctly from the high powered transmissions.

Thus, a wireless power communication system enabling communication that determines whether a device was acted upon is desired.

### SUMMARY

According to one or more embodiments, a wireless power transmission system including a controller and an antenna is provided. The wireless power transmission system includes a transceiver. The transceiver transmits through the antenna a beacon signal, receives through the antenna a reflected signal from a mobile electronic device, and transmits through the antenna a high power transmission to the mobile electronic device. The transceiver further calibrates the high power transmission according to a phase pattern of the reflected signal and operations of the controller. The wireless power transmission system can be implemented as an apparatus, a method, and/or a computer program product.

According to one or more embodiments, a wireless power transmission system is provided. The wireless power transmission system includes a transceiver that generates a beacon signal and a high power transmission. The wireless power transmission system includes an antenna that transmits the beacon signal, receives a reflected signal from a mobile electronic device, and transmits the high power transmission to the mobile electronic device. The wireless power transmission system includes a controller that calibrate the high power transmission according to a phase pattern of the reflected signal. The phase pattern comprising a phase set to guide the high power transmission back to the mobile electronic device that reflected the beacon signal. The wireless power transmission system can be implemented as an apparatus, a method, and/or a computer program product.

These and other features will become readily apparent upon further review of the following specification and drawings.

### BRIEF DESCRIPTION OF THE DRAWINGS

FIG. 1 is an environmental, perspective view of an embodiment of a wireless power transmission system according to one or more embodiments.
FIG. 2A is a perspective view of the phased array net antenna for a microwave transmitter in a wireless power transmission system according to one or more embodiments.
FIG. 2B is a diagrammatic view of a power transmission node in a wireless power transmission system according to one or more embodiments.
FIG. 3A is a block diagram of an embodiment of the wireless power transmission system according to one or more embodiments.
FIG. 3B is a block diagram of an embodiment of the wireless power transmission system according to one or more embodiments.
FIG. 4 is a block diagram of an embodiment of a power transmitter according to one or more embodiments.
FIG. 5 is a block diagram of an embodiment of a power transmitter according to one or more embodiments.
FIG. 6 is block diagram of a controller according to one or more embodiments.
FIG. 7 is block diagram of a receiver according to one or more embodiments.
FIG. 8 is a block diagram of a receiver according to one or more embodiments.
FIG. 9 is a block diagram of an environment according to one or more embodiments.
FIG. 10 is a method according to one or more embodiments.
FIG. 11 is a method according to one or more embodiments.

Similar reference characters denote corresponding features consistently throughout the attached drawings.

### DETAILED DESCRIPTION

The wireless power transmission system is a system for providing wireless high power transmission to an electronic/electrical device. The high power transmission is focused to a location in response to receiving a reflective signal from the electronic/electrical device by a transceiver of the wireless power transmission having antennas. The reflective signal includes information (e.g., a phase pattern) used by the wireless power transmission system to adjust a direction of the high power transmission phases until the electronic/electrical device is jammed, obstructed, crippled, or destroyed.

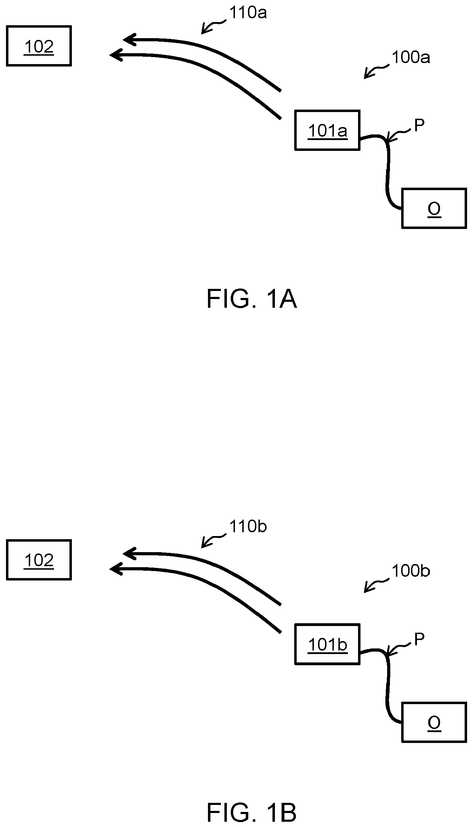

As shown in FIG. 1, the present invention includes a system 100 for communicating with electronic/electrical devices, for example a device 102 (e.g., a laptop computer, a mobile device, or a drone), or other devices, via microwave energy. In the system 100, power transmission grid 101 (or an alternative power transmission grid) can obtain operational power from the A. C. mains via power cord P being plugged into power outlet O. The microwave transmission frequency is preferably an available FCC unregulated frequency having a suitable wavelength.

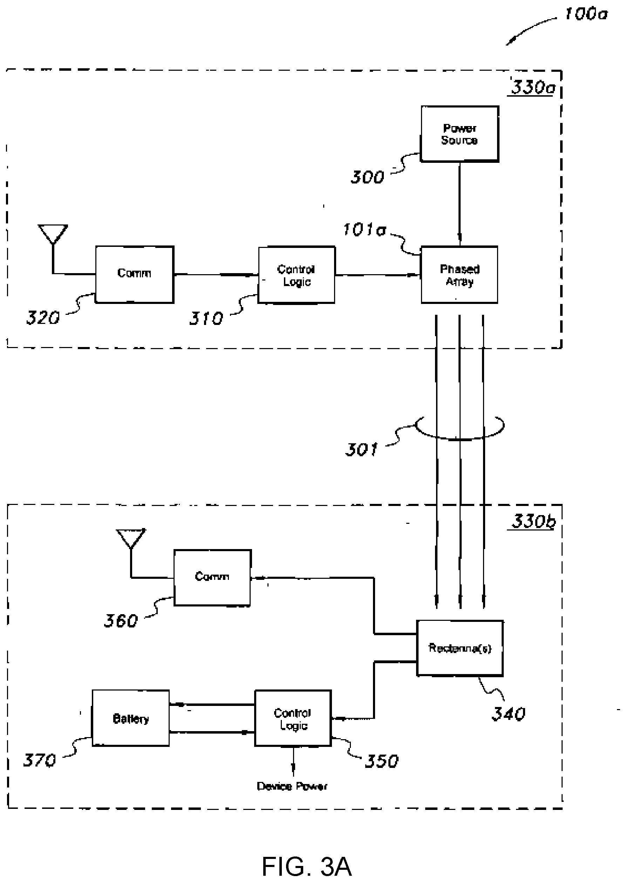

As shown in FIGS. 1-3B, the microwave energy is focused onto a device 102 by a power source 300 connected to one or more adaptively-phased microwave array emitters 204, i.e., antennae or radiators. According to one or more embodiments, the microwave energy from the adaptively-phased microwave array emitters 204 may be focused onto the device. As shown in FIGS. 1 and 3A-3B, preferably highly efficient rectennas 340 (a rectenna is a rectifying antenna that converts microwave energy directly into direct current (D.C.) electricity) within the device 102 receive the microwave energy. In an embodiment, a communications channel is opened between the wireless power source 100 and power receiver 330b in the device 102 on a frequency other than the frequency used to convey power.

The device 102 relays a received beam signal strength at the rectennas 340 over the communications channel 110 to a receiver section of communications device 320 in the power transmitter 330a of system 100 via a signal from a transmitter section of communications device 360 in the power receiver 330b. This information is used by control logic 310 of the system 100 to power up, power down, and adjust the transmitting phases of the microwave array emitter nodes 204 until a maximum microwave energy beam 301 is radiated by the array 110, as reported by the device 102.

Each emitter 204, being connected to a single source of the desired transmission frequency, can transmit a signal with a specific phase difference, which is a multiple of λ/2. The λ/2 phase increments are exemplary only, and other phase increments, for example λ/4, λ/8, λ/16, and other increments, are possible. Preferably, power is not adjusted, except that the emitter 204 can be turned off or turned on to a desired phase.

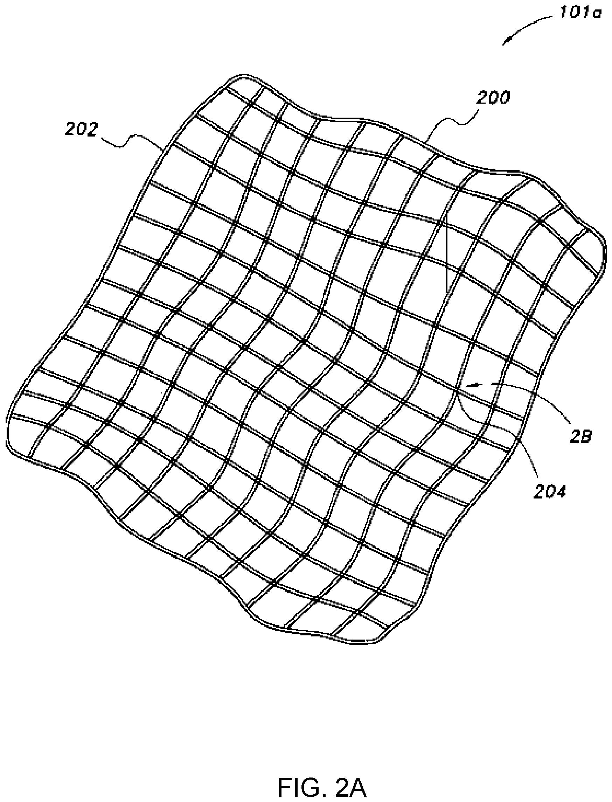

As most clearly shown in FIGS. 2A-2B, vertical and horizontal cables intersect at each array node 204. This configuration applies to array 101. Within vertical cable 202, wire 210 is a zero (0) λ phase feed line. Wire 212 is a ½ λ phase feed line, and wire 209 is a vertical control line. Similarly, within horizontal cable 200, wire 214 is a λ phase feed line. Wire 216 is a 3/2 λ phase feed line, and wire 211 is a horizontal control line. Control lines 209 and 211 can be connected to the controller 310 in order to control which phase is active on any given node 204. Single antenna control can be on a chip 206, while the actual node radiator or antenna 208 may be formed as a circular element surrounding the geometric center of the node 204. It should be understood that either a single controller or a plurality of controllers may control one or more of power transmission grids.

An exemplary algorithm of control logic 310 for system 100 might be as follows: (1) the power receiver 330 can use the communications channel 110 to declare its presence to any transmitters 330a in the vicinity; (2) the power transmitter 330a may communicate its presence on the communications channel 110 and start transmitting with only one of its antennae 208 or nodes 204; (3) the power receiver 330b may acknowledge receiving the faint signal on the communications channel 110; (4) the power transmitter 330a switches on another antenna 208 or node 204 with a default phase of zero and may ask the receiver 330b over the communications channel 110 for signal strength; (5) the power receiver 330b may send back a signal indicating that the received signal is higher, the same, or lower than before; (6) if the signal is lower than or the same as before, the controller 310 may cause the phase at node 204 to increase its phase by ½ λ and request another signal strength transmission; (7) steps 5 and 6 are repeated for all phases; (8) if no increase in signal strength is observed then that particular node 204 is switched off and another node is used in the process, repeating from step 4; (9) steps 4-6 are repeated until all emitters nodes are in use.

In another example, step (6) may include increasing the phase over a three-phase cycle that includes 0, ½ λ, and 5 λ/4 radians. In this manner, the approximate shape of the whole sinusoidal curve may be determined. Accordingly, the phase angle of the peak power may be determined. Also, since when adding up tuned antennas, the next added antenna received power may only be a small percentage of the total power received. Thus, adding the second antenna may increases the power by 4x, while adding the 101st antenna may add 2% to the power and the 1001^{st} may add 0.2% to the total power received. This may make it difficult to detect the actual power gain/loss from the tested antenna. Therefore, only a few antennas may be powered up during the testing cycle, and the phases for each antenna tested may be remembered. Once the full array's phases have been determined, all the elements may be switched on to deliver power.

Alternatively, all of the antennas in the power transmitted may be re-tuned, possibly by moving their phases slightly around their current values, and detecting the impact on the received signal. If it improves in one direction, (e.g., advancing or retarding the phase), the phase may continue to be cycle/incremented until there is no improvement to either side. This will depend on the ability to detect the change in received power level for a large array, otherwise, the whole array might be required to switch off and re-establish the phases from scratch

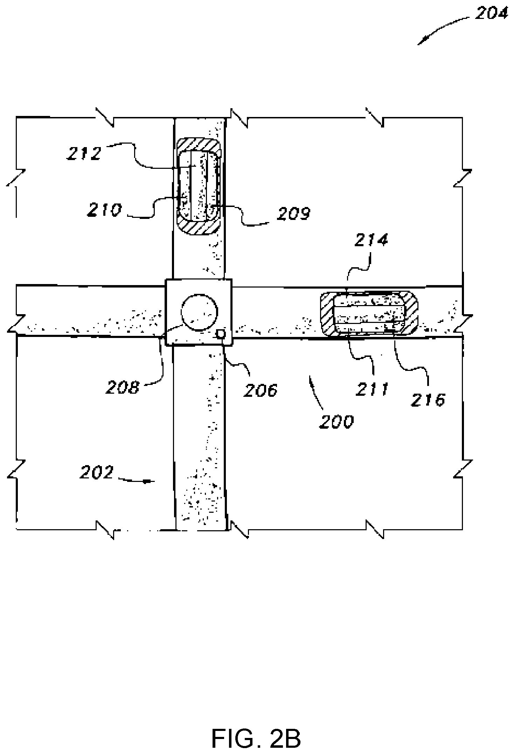

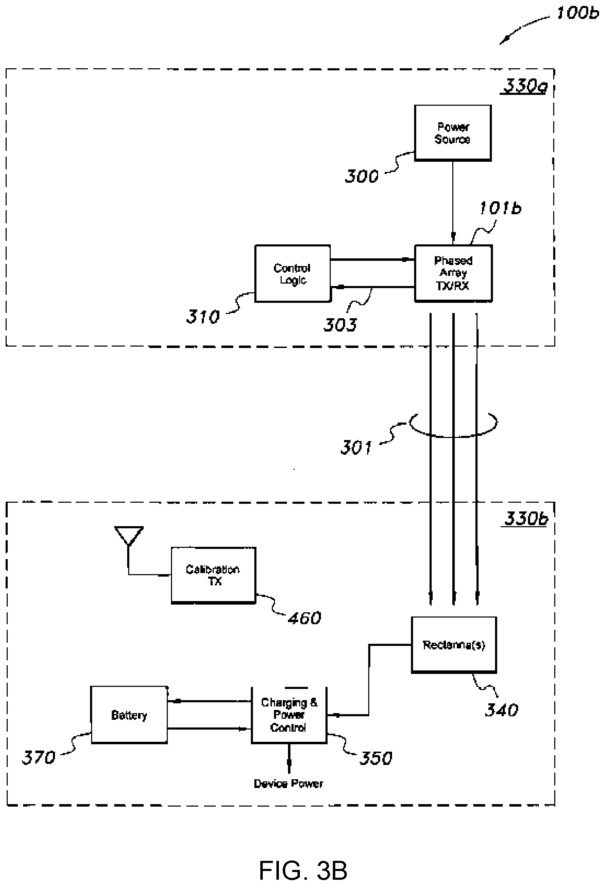

In another embodiment, as most clearly shown in FIGS. 2B and 3B, each array element or node 204 can be set to receive a calibration signal from a calibration transmitter 460 in the power receiving system 330b. Each array element or node 204 can send the received calibration signal detected at that node 204 to the control logic 310 via data line 303. Subsequently, either controller 310, controller 206, or both controllers in combination may set each array element or node 204 to the detected phase for that element as a transmitting phase in order to send an optimized power transmission 301 back to the power receiver 330b. In an embodiment 100, a configuration memory device may be in operable communication with the controller logic 310 in order to enable the array to transmit power to a specific location or "hotspot" without first having to communicate to the device 102. This feature is useful in sending power transmission 301 to the device 102 when the device 102 has no reserve power to establish communications channel 110.

Alternatively, another embodiment may operate as follows to utilize two-way capabilities in the receiver and every transmitter antenna, for example that in a transceiver. A controller may prepare every transceiver to receive the beacon signal from the power receiver, (i.e., device to be charged). The device to be charged then sends out a beacon signal, (e.g., calibration signal that may be the same frequency of the phased array via, for example, a wireless communication between the array and the receiver to sync up their clocks), that traverses all open paths between the device to be charged and the power transmitter. The received signal at the power transmitter is equivalent to the sum of all open paths between the receiver and transmitter's antennae that lands on each antenna in the power transmitter, with the sum of each path adding up to a specific power level and phase at every specific power transmitter antenna.

Each antenna in the transmitter array compares the incoming signal with an internal signal to detect the received phase. Once the received phase is established by all the transmitter's antennas, each antenna transmits back at the complex conjugate of the received phase with its full power.

In addition, since the above tuning of the array takes into consideration all possible paths, (e.g., there is no assumption that there is a direct open path between array and receiver or that the receiver moves in smooth and linear motion in the environment), any changes to the configuration of the environment may be equivalent to the receiver being moved or the power transmitter array's physical configuration being changed. Therefore, frequent re-tuning of the array may be required constantly, (e.g., 10 or more times per second).

Since retuning the antenna array requires shutting off the power being sent to "listen" to the receiver's beacon signal, time may be lost that could have been used to power the array. Accordingly, the array may reduce the frequency of the retuning when the power level at the receiver does not change significantly to maximize the power delivery to the receiver. When the power reception at the receiver drops, the array may increase the frequency of the updates until the receiver power stabilizes again. Specific limits on the frequency of the tuning may be set up, for example a minimum of 10 tps (tunings per second) to a maximum of 500 tps.

Alternatively, the tuning of a number (n) antennas may be performed as follows. All n antennas may be switched off. One of the n antennas is then turned on and left on as a reference for each of the other n antennas to tune. Each of the rest of the n antennas are then turned on, their optimal phase is recorded, and they are then turned off. When this sequence is performed on the nth antenna, all antennas are turned on at their respective optimal phases.

With respect to the embodiment of FIG. 1 having a moving receiver, all of the transmitter antennas may need to be re-tuned, for example by moving their phases slightly around their current values and detecting the impact on the received signal. If it improves in one direction, cycling/incrementing the phase continues until there is no improvement to either side. This may depend on the ability to detect a change in the received power level for a large array, otherwise, the whole array might be required to switch off and re-establish the phases from the beginning.

An exemplary array 101 can be a 30x30 grid net of approximately one meter per side, with each intersection of wires having a single transmission antenna 204. Preferably array grid 101 is made of flexible/soft materials. Flexibility of grid material enables a user to physically configure the microwave array emitter grid 101 in a substantially non-uniform, non-coplanar manner, i.e., spread out, but not flat, in order to minimize mirror focal points caused by, for example, flat, two dimensional arrays, and blind spots that ordinarily occur in flat, regularly disposed arrays having discrete phase differences.

The high power transmissions mechanism described herein can operate when the transmitter and receiver are in communication with one another. However, a method for providing high power transmissions to a receiver that has no power to communicate may be beneficial as well. To accomplish this, a location, or locations, that will receive a periodic power transmission burst may be established.

The transmitter antennas may also take the form of including circuitry into a single chip and daisy chaining the chips with wires to create long strips of "phased wires" that may be configured and used in various shapes and designs. Constructing complex arrays with thousands of antennas and associated controllers through strings of "phase control" chips, the wires between the chips may serve as the data paths connecting the chips to a common controller, while at the same time, the wires may also act as the transmitting/receiving antennas themselves. Each chip may have more wires coming out of it acting as antennas. Each antenna may be given an address, (e.g., a, b, c, and other addresses), allowing the chip to control the phase of each antenna independently from the others. Additionally, the wires may be configured in all sorts of arrangements, depending on available space since the tuning of the array is irrespective of the antenna locations and arrangements.

Since the antenna chip controllers are connected through short wires, the wires may be utilized as antenna in several ways. For example, the wires themselves may be driven by oscillator and/or amplifiers, or a shield may be used around the wires, with the shield itself driven and used as an antenna, thus preventing the communication wires from shielding the signal in multi-layers arrays.

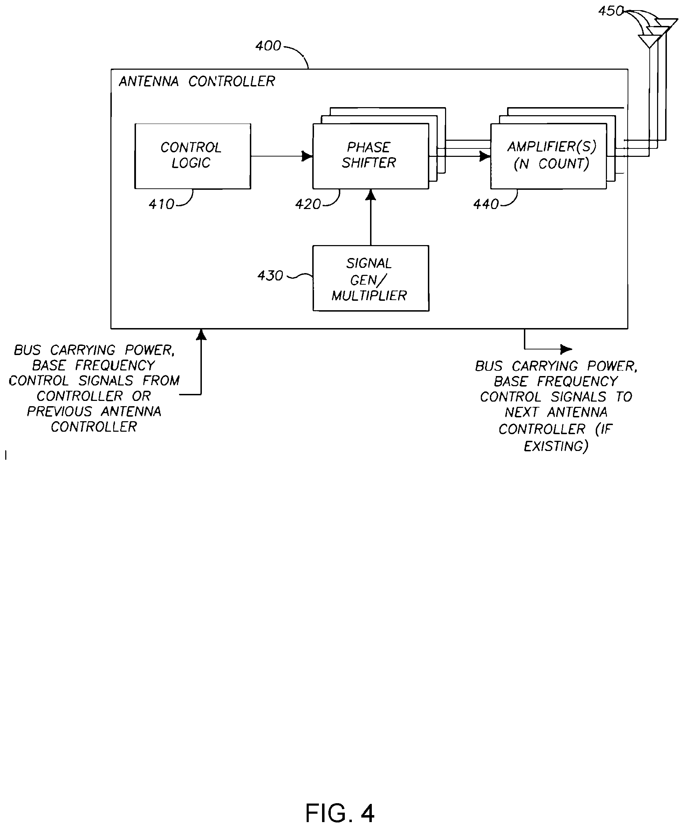

FIG. 4 is a block diagram of an embodiment of a transmitter. The transmitter may be an antenna controller 400 that includes a control logic 410, phase shifters 420 (N Count), signal generator/multiplier 430, amplifiers 440 (N Count), and (N) antennas 450. The antenna controller 400 receives power and base frequency control signals, as well as other commands and communication signals, on a common bus from a single controller that controls all antenna controllers or from a previous antenna controller 400. The power signal, for example, may be received by a power supply of the transmitter 400 (not shown), while the base frequency control signal may be received by the signal generator/multiplier 430, and the communication signals and commands may be received by the control logic 410. In the case where each previous antenna controller 400 provides the power and base frequency control signals, a bus carrying those signals may continue on to the next antenna controller 400. The control logic 410 may control the phase shifter 420 to cause it to adjust the phase of the amplifiers 440. The signal generator/multiplier receives the signal from the bus at, for example 10 MHz, and converts it up to for example 2.4, 5.8 GHz and other values for wireless transmission.

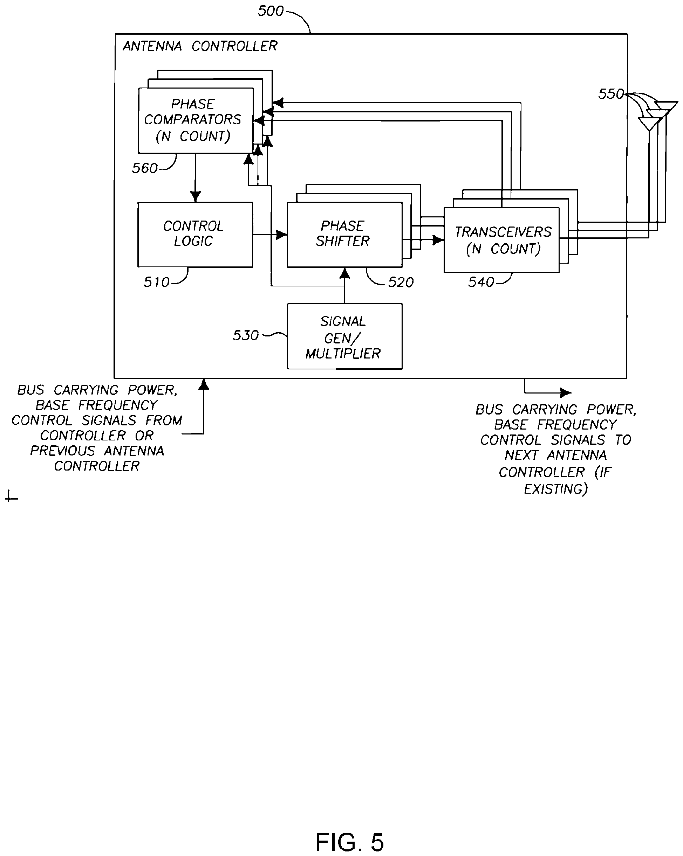

FIG 5 is a block diagram of an embodiment of a transmitter. The transmitter may be an antenna controller 500 that includes a control logic 510, phase shifters 520 (N count), signal generator/multiplier 530, transceivers 540 (N Count), (N) antennas 550, and phase comparators 560 (N Count). The transceivers 540 receive the calibration or beacon signals from the receivers and forward the signal to the phase comparators 560. The phase comparators 560 determine the phase of the received signals of their respective transceivers 540 and determine an optimal phase angle for which to transmit the power signal. This information is provided to the control logic 510, which then causes the phase shifter 520 to set the phase, (e.g., at the complex conjugate of the received beacon/calibration signal), of the transceivers and transmit the power at that set phase. The signal generator/multiplier 530 performs a function substantially similar to the signal generator/multiplier 430 of the antenna controller 400. In addition, the bus signals are similar to those in the transmitter 400, with the signals being received, for example, by the counterpart components in transmitter 500.

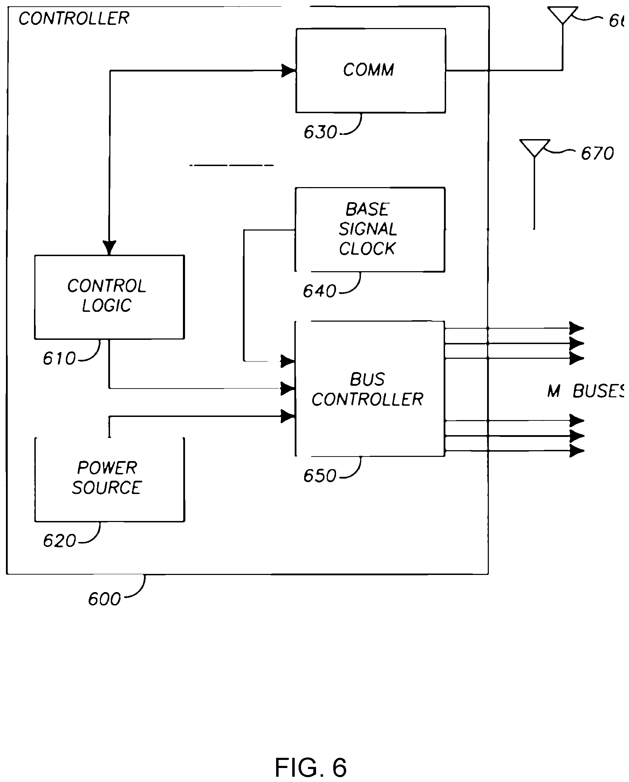

FIG. 6 is block diagram of a controller 600 for controlling, for example, the antenna controllers of FIGS. 4 and 5. The controller 600 includes a control logic 610, power source 620, communication block 630 connected to an antenna 660, base signal clock 640 connected to an antenna 670, and bus controller 650. The control logic 610 controls the bus controller 650, which transmits signals out on M buses to M number of antenna controllers, (e.g., 400 and 500). The power source 620 provides a source of power to the bus controller 650. The communication block 630 transmits and receives data from a receiver over its respective antenna 660. The base signal clock 640 transmits the base signal to other controllers and may also send/receive transmissions to the receiver for synchronization. One controller 600 may be utilized to control all transmitter antennas or several controllers 600 may be used where one controller 600 controls a group of antennas. Additionally, it should be noted that although separate communication blocks and base signal clock, having respective antennas are shown, the functionality may be incorporated into one block, (e.g., the communication block 630).

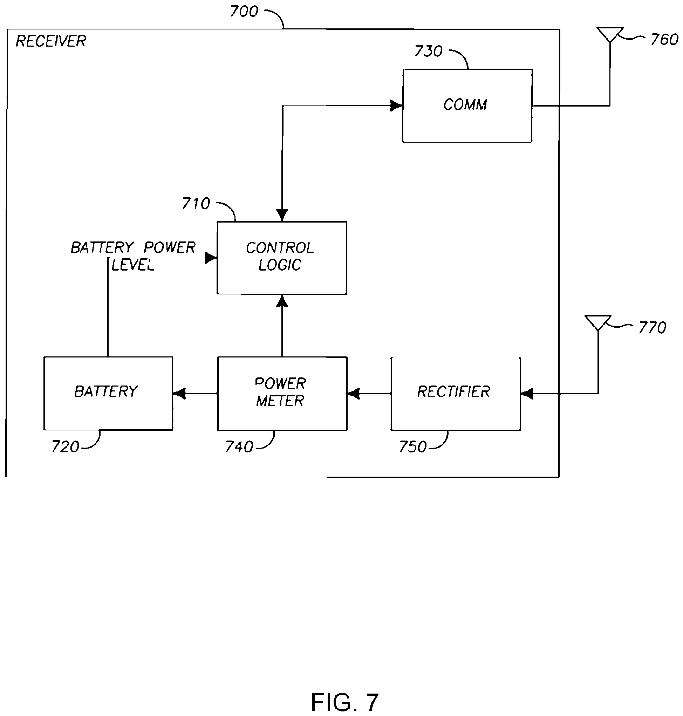

FIG. 7 is block diagram of a receiver 700. The receiver 700 can be in accordance with the embodiment of FIG. 1. The receiver 700 includes a control logic 710, battery 720, communication block 730 and associated antenna 760, power meter 740, and rectifier 750 and associated antenna 770. The control logic 710 transmits and receives a data signal on a data carrier frequency from the communication block 730. This data signal may be in the form of the power strength signal transmitted over the side channel described above. The rectifier 750 receives the power transmission signal from the power transmitter, which is fed through the power meter 740 to the battery 720 (for jamming, obstructing, crippling, or destroying). The power meter 740 measures the received power signal strength and provides the control logic 710 with this measurement. The control logic 710 also may receive the battery power level from the battery 720 itself.

The receiver 700 may be synchronized with, for example, the controller 600 by having the controller 600 transmit the base frequency signal via the antenna 670. The receiver 700 may then use this signal to synchronize a beacon signal, or calibration signal, that the receiver transmits back to the controller 600. It may also be noted that this technique may be utilized with multiple controllers as well. That is, where multiple transmission arrays are being utilized, the controllers may be synchronized with one another by utilizing a base frequency signal sent from one of the controllers.

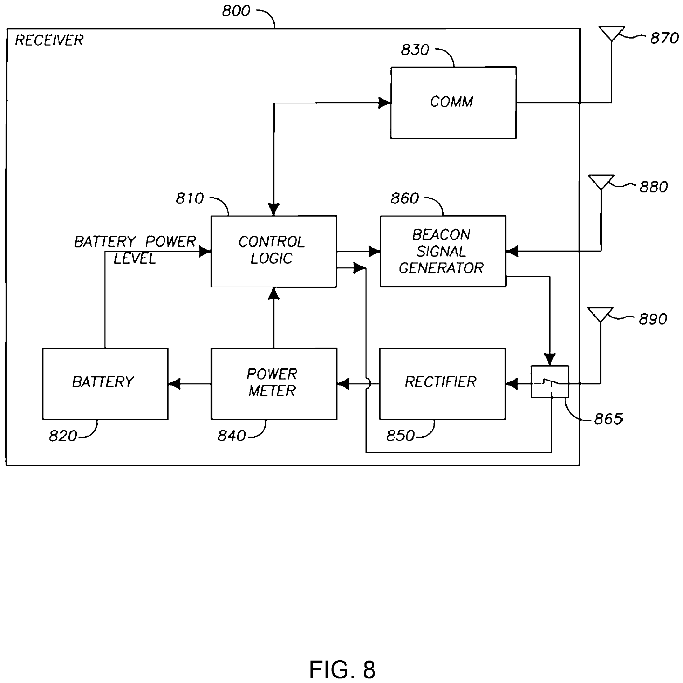

FIG. 8 is block diagram of an alternative receiver 800. The receiver 800 can be utilized in accordance with the embodiment of FIG. 1. The receiver 800 includes a control logic 810, battery 820, communication block 830 and associated antenna 870, power meter 840, rectifier 850, beacon signal generator 860 and an associated antenna 880, and switch 865 connecting the rectifier 850 or the beacon signal generator 860 to an associated antenna 890. The rectifier 850 receives the power transmission signal from the power transmitter, which is fed through the power meter 840 to the battery 820 (for jamming, obstructing, crippling, or destroying). The power meter 840 measures the received power signal strength and provides the control logic 810 with this measurement. The control logic 810 also may receive the battery power level from the battery 820 itself. The control logic 810 may also transmit/receive via the communication block 830 a data signal on a data carrier frequency, for example the base signal clock for clock synchronization. The beacon signal generator 860 transmits the beacon signal, or calibration signal using either the antenna 880 or 890. It may be noted that, although the battery 820 is shown for being charged and for providing power to the receiver 800, the receiver may also receive its power directly from the rectifier 850. This may be in addition to the rectifier 850 providing charging current to the battery 820, or in lieu of providing charging. Also, it may be noted that the use of multiple antennas is one example implementation and the structure may be reduced to one shared antenna.

Since the transmitter's antenna control circuits and the receiver power and control circuits may be built as Integrated Chips (ICs), and may share several key circuit components, the two chip functionalities may be designed as a single chip, and by choosing different packaging or configuration, the chip may function as either a transmitter or receiver. That is, the same chip with certain portions enabled or disabled may be utilized as a transmit antenna controller or a receiver controller. This may reduce the cost of building and testing two different chips, as well as save on chip fabrication costs, which may be significant.

As discussed above, the shape of the transmission grid may take on many varieties. Accordingly, the packing of the antennas could be close enough to around half a wavelength of the transmitted power signal, to several times the wavelength. Two-dimensional arrangements could be made to allow the array to be laid flat under a carpet, or draped over attic heat insulation. For example, multiple wide wires, (e.g., narrow strips of a two-dimensional array), may be employed that contain multiple transmitting antennas. These wide wires could be installed in flooring or within walls. Alternatively, the power transmission grid could be in the form of loop antennas, or any other shape.

Three dimensional arrangements might pack the largest number of antennas and can be incorporated into convenient forms, for example office ceiling tiles, doors, paintings and TVs - thus making the array invisible and non-obtrusive. Also, grid arrays may be formed in several layers stacked behind one another, allowing for a higher density antenna. In this example, the array acts similarly to a "phased volume" having a single forward beam with a minimum of a mirror beam behind it. The mirror beam may be reduced as the thickness of the phased volume increases.

That is, perfectly flat phased arrays using omni-directional antennae may create two "images" of the formed wavefronts symmetrically around the plane of the array, (e.g., when there is free space or an identical environment on opposite sides of the array). This could have undesirable consequences of reducing the power delivery, (e.g., 50% of the power going to the backplane), and thus reducing the efficiency of the transfer. Arranging the array antennae in non-planar form may reduce this symmetrical wavefront even if it has a 3-dimensional array symmetrical design, due to the fact that the antennas will have different phases on across the symmetrical sides of the array, making the signal non-symmetrical and non-"mirrored".

When the array is phase tuned for a particular receiver, every antenna in the array has a specific phase to which it transmits to create a signal that reaches that particular receiver. Two or more receivers can be configured to receive power by one or a combination of the following techniques.

In a technique, time sharing the power delivery may be utilized between the different receivers. This can be done by tuning the antennas in the array to one receiver, and then switching to the next receiver, giving each receiver an equal (or unequal) amount of time. The tuning of the array to each receiver may be done from memory or by re-tuning the array using a process similar to the second embodiment technique.

In another technique, phase modulating all the array antennae to create multiple power spots may be utilized. For each antenna, the received signal is a vector with the phase being the received angle, while the magnitude is the power level of received signal. To create the returned signal to multiple receivers, the phase of the transmission may be determined as being the angle of the sum of the received vectors. Although it may not be necessary to utilize the magnitude of the received signal and transmit from each antenna at normal transmission power, to create a biased multi-focus signal that performs better when multipath signals are considered, the peak received signal power from each receiver may be discovered, and the vector addition may be biased by scaling the vectors against a normalized scale, (e.g., peak power from each receiver may be considered of magnitude 1.0 for the peak power). The addition of the vectors may ensure that each antenna provides more power to the receiver that it delivers more power to, or, alternatively, receives more power from.

Antenna sharing is another technique. By dividing the whole array to multiple sub-arrays, each may dedicate its power to a specific receiver. This approach may be beneficial when the array is large enough to be efficient when divided.

Separate arrays may be used in unison, where the individual array units synchronize their base signal clocks using a shared over the air frequency to achieve a continuous signal from a designated "master" unit, allowing all "slave" transmitter controller units to add up their waveforms coherently. This allows the separate arrays to be distributed in the environment, giving the users flexibility in arranging multiple arrays around the building, living quarters, manufacturing plan or offices. During setup of these controllers, an installer/manager may link the different controller arrays to each other by designating a master unit along with failover sequences such that no matter how many arrays fail, the system will continue working using the available arrays. For example, the arrays may be set by synchronizing them using an atomic clock. That is, separate array units may work without synchronizing on a base frequency by using accurate atomic clocks, (e.g., greater than 1:10^10 accuracy), if the separate array units utilize a single frequency to use for power transmission. In this case, they would be in phase for fractions of a second, allowing coherency of phase/signal to be maintained.

In another power transmission technique, the transmitter may send out a regular signal at the side communication channel broadcasting its presence to all receivers. If there are other transmitters in the vicinity, it ensures to use one of the agreed upon frequencies, or avoid signal collisions by monitoring other transmitter's signals. These broadcast announcements can vary in frequency from several per minute to less than one per minute. The receiver may send out a signal announcing its presence, and the transmitters may negotiate to find which one is the most suitable for acting upon (for jamming, obstructing, crippling, or destroying). Once decided, the receiver "locks" onto a single transmitter. This may require that each transmitter is defined as a logical (single controller) device - which could be made up of multiple linked transmitters. If the controller detects that the power envelope has changed, (i.e., a receiver is not requiring the same power or responding to the action), the controller may continue to provide high power transmission power so that the receiver fails.

In another power transmission technique, the transmitters could be set up such that they are open to serve power to any wanting device, or they could be "paired" with the devices they should serve. Pairing avoids the problem of the neighbors' borrowing power from each other unintentionally, which could affect the efficiency from the transmitter's owner point of view. When the transmitter is confronted with multiple receivers, it may want to establish a hierarchy for prioritization, for example giving the neediest devices the high power transmissions first, which could be established on one or more predefined criteria.

For example, some of the criteria may include: the device is of critical importance to its owner, (e.g., a drone as opposed to a toy); the device does not typically spend all day in the vicinity of the transmitter, (e.g., a router compared to a cellphone); or the device is found to provide an immediate threat. Such devices may be given higher priority over others. Alternatively, a user customized priority may be utilized, whereby the user decides which device should get the highest priority.

The example prioritization preference described above may be preinstalled into the transmitter system, (e.g., in the control logic), with the ability to be overruled by the installer of the array, ensuring that the system is delivering on the prioritization of the owners/users. The owner or user may also desire whether the array would be open to deliver power to any device, or may desire to register specific devices as highest priority or least priority. Additionally, the user or owner may desire to determine whether or not to maintain high power transmissions to specific device even if it is moving.

In another array tuning algorithm embodiment, the transmission of high power transmissions has to be stopped as the array re-tunes to a new location of the receiver. If these re-tune operations are done at a high frequency due to fast movement of the receivers or due to rapid changes in the configuration of the environment, the time needed to keep the array turned off while receiving a new beacon signal could reduce the power delivery efficiency. Accordingly, to counteract this, more than one frequency may be used by the array/receiver. While one frequency is being tuned, another frequency may continue to transmit power, then the subsequent frequency is tuned until all the frequencies have re-tuned, thus avoiding any stopped gaps in the transmission.

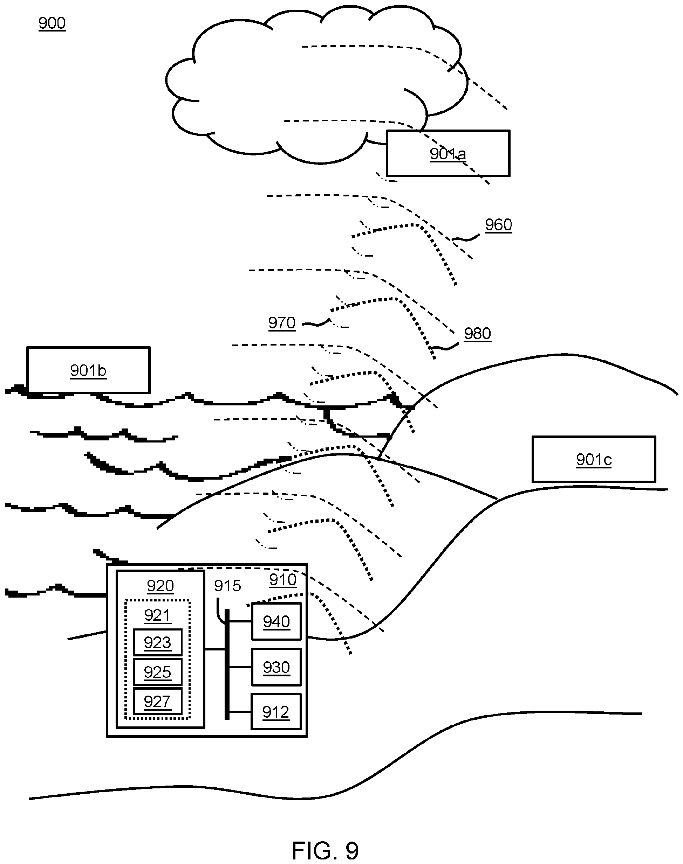

FIG. 9 is a block diagram of an environment 900 according to one or more embodiments. The environment 900 includes a wireless power transmission system 910 for acting upon one or more mobile electronic devices 901 (as represented by air device 901a, water device 901b, and ground device 901c). Note that the one or more mobile electronic devices 901 can be any electronic device capable of traversing air, land, and/or sea, as well as underground and underwater. By way of example, the air device 901a can be a drone, whether autonomous, manned, or controlled, capable of flying. By way of example, the one or more mobile electronic devices 901 are reflective devices. In some cases, the one or more mobile electronic devices 901 are unsuspecting.

The wireless power transmission system 910, generally, can include a controller 912 connected via a bus 915 to a memory 920. The memory 920 can store software 921 that is executable by the controller 912 to cause the system to act upon the one or more mobile electronic devices 901. The operations of the software 921 can include any of the methods or processes described herein. Example operations of the software 921 can include, but are not limited to, a beacon operation 923, a detect operation 925, and a power operation 927 as further described herein (see also the control logic 310).

The wireless power transmission system 910 can also include a transceiver 930 that controls an antenna 940. The antenna 940 can be representative of one or more antennas, for example configured in an array. The antenna 940 can be one or more adaptively-phased microwave array emitters, as well as omni- or semi-directional arrays. According to one or more embodiments, the antenna 940 can be a 2 meter x 2 meter array that emits radio frequency (RF) waves. The antenna 940 based on operations of the transceiver 930 can send and receive transmissions, signals, and/or communications. As shown in FIG. 1, the antenna 940 can send a beacon signal 960 as part of the beacon operation 923, receive a reflected signal 970 as part of the detect operation 925, and send a high power transmission 980 as part of the power operation 927. The controller 912, thus, operates to calibrate the beacon signal 960 and the high power transmission 980, analyze the reflected signal 970, and control the operations of the wireless power transmission system 910.

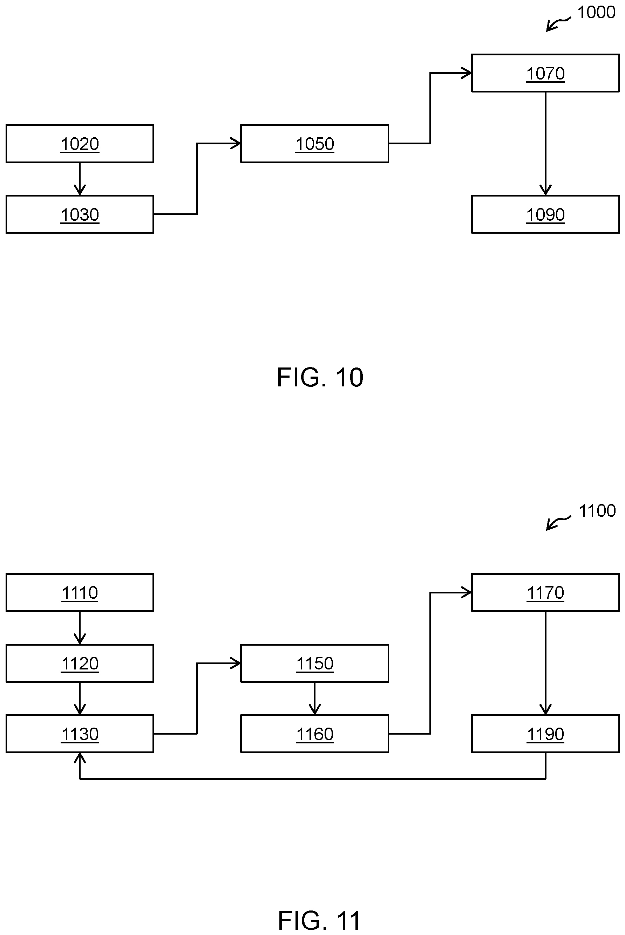

FIG. 10 is a method 1000 according to one or more embodiments. The method 1000 can be an operational example of the wireless power transmission system 910.

At block 1020, according to one or more embodiments, the wireless power transmission system 910 provides the beacon signal 960 to the sky, land, or sea, to detect and locate the one or more mobile electronic devices 901. The transceiver 930 can calibrate the beacon signal 960 according to operations of the controller 912. By way of example, the beacon signal 960 can be a high power beacon like signal sent in indiscriminate directions (i.e., sweeping areas around and beyond the wireless power transmission system 910). By way of example, the air device 901 can be a high flying drone (high meaning greater than 1,000 meters, for example 14,000 meters) that utilizes data communication via an internal antenna, which would reflect some of the beacon signal 960 if the beacon signal 960 had similar frequency to antenna response frequencies. Further, the wireless power transmission system 910 can sweep a set of antenna response frequencies until the wireless power transmission system 910 'hits' the one or more mobile electronic devices 901. The sweep can be along a range of two (2) gigahertz to four (4) gigahertz.

At block 1030, according to one or more embodiments, the beacon signal 960 upon contact with the one or more mobile electronic devices 901 can be reflected in a form of the reflected signal 970. The reflected signal 970 include a phase pattern. The phase pattern can be a phase set that can guide the high power transmission 980 back to a device that reflected the beacon signal 960. The reflected signal 970 can be a faint signal. In turn, at block 1050, the reflected signal 970 is received by the wireless power transmission system 910.

At block 1070, according to one or more embodiments, the wireless power transmission system 910 provides the high power transmission 980 to jam, obstruct, cripple, or destroy the one or more mobile electronic devices 901 (i.e., the wireless power transmission system 910 acts upon the mobile electronic devices 901). The transceiver 930 can calibrate the high power transmission 910 according to the phase pattern of the reflected signal 970 and operations of the controller 912. For instance, by sending out a beacon signal 960 into the sky to detect any air devices 901a and by receiving the reflected signal 970, the transceiver 930 can utilize the phase pattern of the reflected signal 970 to send the high power transmission 980 (i.e., emit a focused power) to that air device 901a. By way of example, the receipt of the high power transmission 980 (i.e., the focused power thereof) can damage circuitry therein if a power of the high power transmission 980 is high enough.

At block 1090, according to one or more embodiments, the wireless power transmission system 910 resends the beacon signal 960 to the sky, land, or sea, to detect and locate the devices 901a. In this way, the wireless power transmission system 910 can determine if further action is required. Further action can include, but is not limited to, looping back through the method 1000 and to recalibrate the high power transmission 910 and resend the high power transmission 910 after recalibration.

FIG. 11 is a method 1001 according to one or more embodiments. The method 1100 can be an operational example of the wireless power transmission system 910.

At block 1110, the controller 912 could encode the beacon signal 960. Encoding the beacon signal 960 can include, but is not limited to, convert the beacon signal 960 into a particular form that is recognized by friendly devices but not the one or more mobile electronic devices 901. According to one or more embodiments, to prevent the wireless power transmission system 910 to deliver high power signals to a ground-based beacon generator controlling the friendly devices to matching signals for 'true' devices. Further, the wireless power transmission system 910 emits a low power signal from the ground-based beacon generator, as a calibration signal, to be received by the transceiver 930. The controller 912, in turn, uses a phase set from this calibrated signal to subtract from any phases (e.g., vectors of every phase detected on the calibration signal) received from the sky and eliminate or significantly reduce a power that would be delivered to the ground-based beacon generator, while at a same time focus most of the high power transmission 980 on the reflected devices in this sky (e.g., the one or more mobile electronic devices 901).

At block 1120, the wireless power transmission system 910 provides the beacon signal 960 to the sky, land, or sea, to detect and locate the one or more mobile electronic devices 901. The transceiver 930 can communicate on a communications channel of the one or more mobile electronic devices 901, for example by starting transmission with only the antenna 940. According to one or more embodiments; a device or a person with the antenna 940 can point the antenna 940 in a desired direction. For instance, the antenna 940 can sweep the sky and/or across the horizon.

At block 1130, the beacon signal 960 upon contact with the one or more mobile electronic devices 901 can be reflected in a form of the reflected signal 970. To achieve enough reflection from the one or more mobile electronic devices 901, the transceiver 930 can include an emitted ground based beacon generator that provides power to the beacon signal 960 for parts thereof to reflect back to the transceiver 930. Further, the antenna 940 can include sensitive components that detect any faint level of the reflected signal 970 from the one or more mobile electronic devices 901.

At block 1150, the reflected signal 970 is received by the wireless power transmission system 910. The transceiver 930 can acknowledge receiving the reflected signal 970 to the controller 912 by providing the reflected signal 970 and components thereof to the controller 912.

At block 1160, the controller 912 analyzes the reflected signal 970 and determines a direction of the one or more mobile electronic devices 901. According to one or more embodiments, the controller 912 can analyze a phase pattern on the emitted ground based beacon generator to determine an exact direction of the electronic device 901a in the sky while providing a rough estimate of a distance from the wireless power transmission system 910. For example, the analysis by the controller 912 can be an evaluation of a Fresnel pattern across the antenna 940 (e.g., note that in a Fresnel pattern, an increase in rings is an indication of a closer electronic device 901a). The distance can also be estimated using a round-trip time for the reflect signal 970. According to one or more embodiments, the controller 912 can switch different antenna 940 (of an array), in some cases with a default phase of zero. According to one or more embodiments, the controller 912 can selecting a frequency to match a frequency communication channels of the one or more mobile electronic devices 901 that will result in damaging a circuitry behind antennas of the one or more mobile electronic devices 901.. According to one or more embodiments, the controller 912 can selecting a frequency to match a frequency of a global positioning system (GPS) of the one or more mobile electronic devices 901 that will result in damaging a circuitry behind antennas of the one or more mobile electronic devices 901. According to one or more embodiments, the controller 912 can select a power, for example from ten (10) watts to hundreds (100s) of watts. Thus, the controller 912 can determine one or more of the direction, the frequencies of channels, and/or the phase patterns of one or more mobile electronic devices 901.

At block 1170, the wireless power transmission system 910 provides the high power transmission 980 to jam, obstruct, cripple, or destroy the one or more mobile electronic devices 901 (i.e., the wireless power transmission system 910 acts upon the mobile electronic devices 901). The high power transmission 980 is transmitted according to the analysis of the direction, the frequencies of channels, and/or the phase patterns. The high power transmission 980 can be transmitted without receiving a location signal from the one or more mobile electronic devices 901 that indicates a location thereof. Note that jamming (i.e., prevent communication) the one or more mobile electronic devices 901 can occur when the one or more mobile electronic devices 901 are farther away (e.g., one or more kilometers), while destruction of circuitry of the one or more mobile electronic devices 901 would happen as closer distances (e.g., less than a kilometer). According to one or more embodiments, the wireless power transmission system 910 can deliver a kilowatt of power at hundred (100) meters. According to one or more embodiments, the wireless power transmission system 910 can emit the high power transmission 980 towards that flying electronic device 901a that would be absorbed by an antenna therein and oversaturate and damage a circuitry behind communications capabilities of the flying electronic device 901a.

At block 1190, the wireless power transmission system 910 resend the beacon signal 960 to the sky, land, or sea, to detect and locate the devices 901a. The wireless power transmission system 910 can continuously emit the beacon signal 960 while the one or more mobile electronic devices 901 are being bombarded with the high power transmission 980. In this way, the wireless power transmission system 910 can maintain location of the one or more mobile electronic devices 901. The beacon signal 960 can refresh, for example at a value selected from a range of 10x per second to 100x per second. The method 1100 can loop back to block 1130, such that a portion of the method is repeated.

According to one or more embodiments, to detect the frequency used by the one or more mobile electronic devices 901, the wireless power transmission system 910 can transmit at different frequencies and determine at which frequencies that are a highest amount of reflection. The wireless power transmission system 910 transmits using that highest reflected frequency to jam, obstruct, cripple, or destroy the one or more mobile electronic devices.

According to one or more embodiments, a wireless power transmission is provided. The wireless power transmission system includes a controller and an antenna is provided. The wireless power transmission system includes a transceiver. The transceiver transmits through the antenna a beacon signal, receives through the antenna a reflected signal from a mobile electronic device, and transmits through the antenna a high power transmission to the mobile electronic device. The transceiver further calibrates the high power transmission according to a phase pattern of the reflected signal and operations of the controller

It is to be understood that the present invention is not limited to the embodiments described above, but encompasses any and all embodiments within the scope of the following claims.

## Claims

1. A wireless power transmission system comprising:
a transceiver configured to generate a beacon signal and a high power transmission;
an antenna configured to transmit the beacon signal, receive a reflected signal from a mobile electronic device, and transmit the high power transmission to the mobile electronic device; and
a controller configured to calibrate the high power transmission according to a phase pattern of the reflected signal, the phase pattern comprising a phase set to guide the high power transmission back to the mobile electronic device that reflected the beacon signal.

2. The wireless power transmission system of claim 1, wherein the high power transmission is transmitted without receiving from the mobile electronic device a location signal that indicates a location of the mobile electronic device.

3. The wireless power transmission system of claim 1, wherein the high power transmission jams, obstructs, cripples, or destroys the mobile electronic device.

4. The wireless power transmission system of claim 1, wherein the antenna comprises or more adaptively-phased microwave array emitters.

5. The wireless power transmission system of claim 1, wherein the wireless power transmission system sweeps a set of antenna response frequencies with the reflected signal along a range of two (2) gigahertz to four (4) gigahertz.

6. The wireless power transmission system of claim 1, wherein the wireless power transmission system transmits the reflected signal at different frequencies and determine which of the different frequencies comprises a highest amount of reflection.

7. The wireless power transmission system of claim 1, wherein the wireless power transmission system encodes the beacon signal into a form recognizable by a friendly device and not recognizable by the mobile electronic device.

8. The wireless power transmission system of claim 1, wherein resends the beacon signal to detect and locate the mobile electronic devices to determine whether further action is required.

9. The wireless power transmission system of claim 1, wherein the phase pattern is set to guide the high power transmission back to the mobile electronic device.

10. The wireless power transmission system of claim 1, wherein the mobile electronic device comprises a drone.

11. A method comprising:
transmitting, by an antenna coupled to a transceiver and a controller of a wireless power transmission system, a beacon signal,
receiving, by the antenna, a reflected signal from a mobile electronic device,
calibrating, by the controller, the high power transmission according to a phase pattern of the reflected signal, the phase pattern comprising a phase set to guide the high power transmission back to the mobile electronic device that reflected the beacon signal, and
transmitting, by the antenna, a high power transmission to the mobile electronic device.

12. The method of claim 11, wherein the high power transmission is transmitted without receiving from the mobile electronic device a location signal that indicates a location of the mobile electronic device.

13. The method of claim 11, wherein the high power transmission jams, obstructs, cripples, or destroys the mobile electronic device.

14. The method of claim 11, wherein the antenna comprises or more adaptively-phased microwave array emitters.

15. The method of claim 11, wherein the wireless power transmission system sweeps a set of antenna response frequencies with the reflected signal along a range of two (2) gigahertz to four (4) gigahertz.

16. The method of claim 11, wherein the wireless power transmission system transmits the reflected signal at different frequencies and determine which of the different frequencies comprises a highest amount of reflection.

17. The method of claim 11, wherein the wireless power transmission system encodes the beacon signal into a form recognizable by a friendly device and not recognizable by the mobile electronic device.

18. The method of claim 11, wherein resends the beacon signal to detect and locate the mobile electronic devices to determine whether further action is required.

19. The method of claim 11, wherein the phase pattern is set to guide the high power transmission back to the mobile electronic device.

20. The method of claim 11, wherein the mobile electronic device comprises a drone.
